# EUROPÄISCHE PATENTANMELDUNG

(11) **EP 1 883 024 A1**
(43) Veröffentlichungstag der Anmeldung: **30.01.2008**
(21) Anmeldenummer: 07110373.3
(22) Anmeldetag: 15.06.2007
(51) Int. Cl.: G06F 17/30, G01C 21/32

(54) **Verfahren zum Betrieb eines Navigationssystems**

(30) Priorität: 25.07.2006 DE 102006034410
(71) Anmelder: ROBERT BOSCH GMBH, 70442 Stuttgart (DE)
(72) Erfinder: Listle, Holger, 31141, Hildesheim (DE); Krewer, Joerg, 30982, Pattensen (DE); Lueer, Stefan, 31139, Hildesheim (DE); Osmers, Ralf, 31139, Hildesheim (DE); Walkling, Uwe, 31035, Barfelde (DE); Brandes, Henry, 31556, Woelpinghausen (DE); Fiedler, Marco, 31199, Diekholzen (DE); Klein, Thomas, 31061, Alfeld (DE)

(57) **Zusammenfassung**

Die Erfindung betrifft ein Verfahren zum Betrieb eines Navigationssystems (1), insbesondere eines Navigationssystems für ein Kraftfahrzeug, mit einem Speicher (2), einer Anzeigeelement (3) und zumindest einem Bedienelement (4), wobei Kartendaten von einem Kartendatenspeicher (5) in den Speicher (2) ladbar sind, wobei die Kartendaten Daten verschiedener Kategorien umfassen und in geografische Partitionen unterteilbar sind, wobei für jede Partition die Daten für jede Kategorie in eine Liste als Listenelemente abgelegt sind, wobei Listenelemente eine Relation zu anderen Listenelementen aufweisen.

## Beschreibung

### Technisches Gebiet

Die Erfindung betrifft ein Verfahren zum Betrieb eines Navigationssystems, insbesondere eines Navigationssystems für ein Kraftfahrzeug, sowie ein solches Navigationssystem und ein diesbezügliches Speichermedium mit Kartendaten.

### Stand der Technik

Navigationssysteme verwenden Kartendaten zur Darstellung eines Kartenausschnitts auf einem Display, zur Routendarstellung und -bestimmung, zur Zieleingabe, Zielfindung und zur Zielführung beispielsweise eines von einem Fahrer gelenkten Fahrzeugs, wie beispielsweise Kraftfahrzeug.

Die Kartendaten sind dabei vorteilhaft digitale Kartendaten, die auf einem Speichermedium gespeichert sind und die zumindest teilweise in einen Speicher des Navigationssystems geladen werden. Bei den Kartendaten werden beispielsweise Straßen als sogenannte Kanten dargestellt, wobei Kreuzungspunkte oder Abzweigungen von Straßen als sogenannte Knoten dargestellt werden. Dabei wird der reale Straßenverlauf durch die Kanten und Knoten angenähert, wobei eine Kante beispielsweise durch eine Aneinanderreihung von geradlinigen Kantenabschnitten beschrieben werden kann. Die Darstellung von Straßennetzen wird so mittels gerichteter Graphen mit Kanten und Knoten realisiert. Je nach Komplexität einer Kreuzung wird diese durch einen Knoten oder auch durch mehrere Knoten beschrieben. Auch können innerhalb einer Kreuzung Kanten vorliegen.

Darüber hinaus weisen Kartendaten Zusatzinformationen auf, wie die Straßennamen, sogenannte Punkte des Interesses, auch Points of Interest (POI) genannt, wie beispielsweise Restaurants, Hotels, Museen, Tankstellen etc.

Auch werden digitale Karten in einzelne gebietsweise Partitionen aufgeteilt, damit die in den Speicher beispielsweise eines Navigationssystems zu ladenden Daten von der Datenmenge begrenzt werden können, da die Datenmenge die Größe des benötigten Speichers und die Ladegeschwindigkeit oder Verarbeitungs-geschwindigkeit beeinflusst.

Eine Aufteilung von Kartendaten in Partitionen ist beispielsweise durch die WO 99/58934 bekannt geworden.

Üblicher Weise sind die Daten einer digitalen Karte hierarchisch aufgebaut, so dass verschiedene hierarchische Zweige nebeneinander verwendet werden, um die verschiedenen Elemente in einer Art hierarchischen Baumstruktur zu strukturieren. Die so verwendeten Datenbäume sind sehr umfangreich und sind nur über die Vorgaben der übergeordneten Hierarchien eingeschränkt.

Dabei ist es allerdings sehr schwierig ein beispielsweise geografisches Gebiet aus einer hierarchischen Struktur auszuschneiden und dem Fahrer eines Fahrzeugs oder dem Bediener des Navigationssystems eine Zieleingabe aus einem begrenzten Raum anzubieten, wie bei einer sogenannten Korridor-Zieleingabe. Entweder wird dafür sehr viel Speicher benötigt, um ein Gebiet um beispielsweise die lokale Position des Fahrzeugs oder des Navigationssystems anzubieten, das etwa den gleichen Radius in alle Richtungen vorsieht, oder der Radius ist in verschiedenen Richtungen unterschiedlich groß. Dies hat wiederum den Nachteil, dass der Bereich, der für den Fahrer eventuell gerade interessant ist, nicht mehr in dem dargestellten Bereich liegen könnte und somit eine solche Darstellung keine hohe Akzeptanz bei dem Fahrer oder Bediener des Navigationssystems findet.

Darstellung der Erfindung, Aufgabe, Lösung, Vorteile

Aufgabe der Erfindung ist es, ein Verfahren zum Betrieb eines Navigationssystems zu schaffen, bei welchem die Nachteile des Standes der Technik vermindert oder gar vermieden werden und ein Verfahren zuschaffen, mittels welchem eine hierarchische Umgebungszieleingabe mit zumindest nahezu oder angenähert gleichem oder geringfügig abweichendem Radius in nahezu alle Richtungen angeboten werden kann, wobei lediglich ein begrenzter Teil der Gesamtdatenmenge oder -datenbasis verwendet wird. Weiterhin ist es eine Aufgabe der Erfindung, ein Navigationssystem zu schaffen, mittels welchem das erfindungsgemäße Verfahren durchführbar ist. Auch ist es die Aufgabe, ein Speichermedium mit darauf gespeicherten Kartendaten zu schaffen, welches einen verbesserten Verfahrensablauf unter Benutzung von Kartendaten erlaubt.

Die Aufgabe bezüglich des Verfahrens wird gelöst durch ein Verfahren zum Betrieb eines Navigationssystems, insbesondere eines Navigationssystems für ein Kraftfahrzeug, mit einem Speicher, vorteilhaft auch mit einem Anzeigeelement und zumindest einem Bedienelement, wobei Kartendaten von einem Kartendatenspeicher in den Speicher ladbar sind, wobei die Kartendaten Daten verschiedener Kategorien umfassen und in geografische Partitionen unterteilbar sind, wobei für jede Partition die Daten für jede Kategorie in einer Liste abgelegt sind, wobei Listenelemente eine Relation zu anderen Listenelementen aufweisen.

Dabei ist es besonders vorteilhaft, wenn durch die Partitionen sich etwa ein Kreis approximieren lässt. Dadurch kann ein Zielgebiet um die aktuelle Position herum gebildet werden. Auch ist es vorteilhaft, wenn zumindest einzelne der Partitionen eine quadratische, sechseckige oder rechteckige geometrische Gestalt oder eine unregelmäßige geometrische Gestalt haben.

Weiterhin ist es zweckmäßig, wenn die Kartendaten in zumindest einzelnen Listen nach Namen sortiert abgelegt sind. Dadurch kann eine erleichterte Auffindbarkeit der Datensätze erreicht werden. Auch ist es zweckmäßig, wenn zumindest eines der folgenden Kartenelemente als eine Kategorie angesehen wird bzw. in einer Kategorie gespeichert wird: Land, Stadt, Stadtteil, Teilort, Straße, Punkt des Interesses, Restaurant, Hotel, Museum oder Andere. Dabei können Stadt und Stadtteil auch in einer Kategorie zusammengefasst sein.

Besonders zweckmäßig ist es, wenn die Listenelemente zusätzlich mit ihrer geografischen Position attributiert sind. Dadurch kann eine Sortierung der Listenelemente nach Entfernung von einem vorgebbaren Punkt durchgeführt werden.

Die Aufgabe hinsichtlich des Navigationssystems wird erreicht durch ein Navigationssystem mit einem Speicher, vorteilhaft auch mit einem Anzeigeelement und zumindest einem Bedienelement, wobei der Speicher der Speicherung von ausgewählten Kartendaten aus einem Kartendatenspeicher dient und Anwendungen auf den Speicher und die dort gespeicherten Kartendaten zugreifen zur Durchführung eines oben beschriebenen Verfahrens.

Hinsichtlich der Aufgabe bezüglich des Speichermediums wird diese erreicht durch ein Speichermedium mit einer digitalen Karte mit Kartendaten, wobei die Kartendaten Daten verschiedener Kategorien umfassen und in geografische Partitionen unterteilbar sind, wobei für jede Partition die Daten für jede Kategorie in eine Liste als Listenelemente abgelegt sind, wobei Listenelemente eine Relation zu anderen Listenelementen aufweisen, wobei mit den Kartendaten ein oben beschriebenes Verfahren durchführbar ist.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung eines erfindungsgemäßen Navigationssystems;
- Fig. 2: eine Tabelle zur Erläuterung der Erfindung; und
- Fig. 3: einen Kartenausschnitt;

### Bevorzugte Ausführung der Erfindung

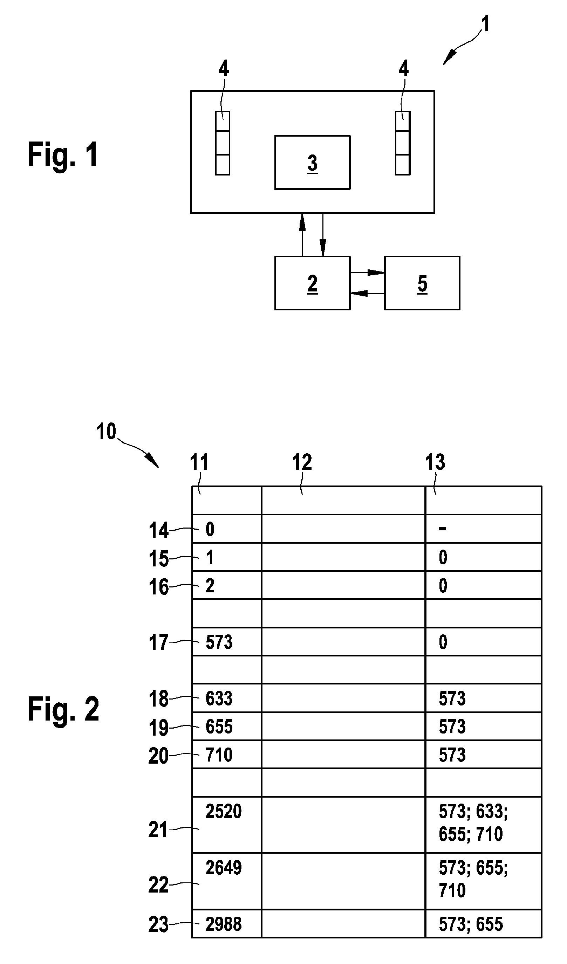

Die Figur 1 zeigt ein Navigationssystem 1 in schematischer Darstellung mit einem Speicher 2, einem Anzeigeelement 3, wie Monitor oder Display, und zumindest einem Bedienelement 4. Der Speicher 2 dient zur Speicherung von ausgewählten Kartendaten aus einem Kartendatenspeicher 5, wobei Anwendungen des Navigationssystems 1 auf den Speicher 2 und die dort gespeicherten Kartendaten zugreifen. Der Kartendatenspeicher 5 kann dabei vorteilhaft ein Festplattenspeicher, eine CD-ROM, eine DVD, ein Halbleiterspeicher oder ein anderweitiger Speicher sein, auf welchem zumindest ausgewählte Kartendaten einer digitalen Karte gespeichert sind. Das Navigationssystem 1 erzeugt beispielsweise Kartendarstellungen auf dem Anzeigeelement 3, wobei berechnete Routen in einer Kartendarstellung auf dem Anzeigeelement anzeigbar sind. Auch können in der dargestellten Kartendarstellung sogenannte Punkte des Interesses dargestellt werden. Mittels des Bedienelements 4 kann durch den Bediener beispielsweise ein Fahrtziel eingegeben, eine Zielführung gestartet werden oder eine andere Anwendung gestartet oder durchgeführt werden.

Die Figur 2 zeigt zur Erläuterung des erfindungsgemäßen Verfahrens eine Liste oder Tabelle 10, in welcher in der ersten Spalte 11 ein Index, in der zweiten Spalte 12 einen Namen und in der dritten Spalte 13 eine Relation oder Relationen dargestellt oder aufgeführt sind.

So ist beispielsweise in der Zeile 14 mit Index 0 das Land Deutschland ohne Relation aufgelistet. In den folgenden Zeilen 15 bis 17 sind Städte aufgeführt, welche nach Namen alphabetisch sortiert sind, eine aufsteigende Indizierung des Indexes aufweisen und jeweils die Relation 0 aufweisen. Dies bedeutet, dass die jeweiligen Städte der Zeilen 15 bis 17 in Deutschland liegen. Daneben könnten auch andere Länder und auch Städte dieser anderen Länder aufgeführt sein, so dass über jeweilige diesen Städten zugeordneten Relation die Zuordnung der Stadt zum Land erfolgen kann.

In den Zeilen 18 bis 20 sind Teilorte oder Stadtteile aufgeführt, welche die Relation 573 aufweisen. Dies bedeutet, dass diese Stadtteile Teile von Hildesheim mit Index 573 sind bzw. Hildesheim zugeordnet sind.

Weiterhin sind in den folgenden Zeilen 21 bis 23 Straßen mit einem Index versehen aufgelistet, welche wiederum Relationen aufweisen, wobei die Relationen auf einen Index oder mehrere Indizes verweisen. Dies bedeutet beispielsweise, dass die Straße mit Namen Alfelder Straße mit Index 2520 die Relationen 573, 633, 655 und 710 aufweist. Dies bedeutet, dass die Straße Alfelder Straße den Orten Hildesheim, Ochtersum, Oststadt und Weststadt zugeordnet ist, wobei Ochtersum, Oststadt und Weststadt jeweils die Relation 573 aufweisen, welche sie auf Hildesheim verweist, so dass diese Orte als Teilorte oder Stadtteile von Hildesheim verknüpft sind.

Weiterhin ist zu erkennen, dass die Straße mit dem Namen B6 mit Index 2649 die Relationen 573, 655 und 710 aufweist. Dies bedeutet, dass die Straße B6 den Orten Hildesheim, Oststadt und Weststadt zugeordnet ist. Darüber hinaus ist zu erkennen, dass die Straße mit dem Namen Goslarsche Straße mit Index 2988 die Relationen 573 und 655 aufweist. Dies bedeutet, dass die Straße Goslarsche Straße den Orten Hildesheim und Oststadt zugeordnet ist.

Die in der Figur 2 dargestellte Liste oder Tabelle 10 ist vorteilhaft als eine integrierte Liste dargestellt. Auch kann abweichend hiervon eine Reihe von Listen oder Tabellen erstellt und verwendet werden, die spezifisch sind für ihren Inhalt. So kann beispielsweise eine gesonderte Liste mit Ländern verwendet werden, eine Liste für Städte und/oder Stadtteile, eine Liste für Straßen, eine Liste für Punkte des Interesses, wie Restaurants, Hotels etc. Diese gesonderten Listen können getrennt behandelt werden oder zum Teil oder auch wie in Figur 2 insgesamt zusammengefasst sein. Vorteilhaft sind die Einträge der Listen sortiert und nach der Sortierung geordnet. Beispielsweise kann eine Sortierung nach Namen vorgenommen sein. Dies ist zweckmäßig bei alphabetischer Eingabe oder Suche.

Erfindungsgemäß weisen die Listenelemente Relationen zu anderen Listenelementen auf. Dabei können auch sogenannte Daten-Offset als Relation auftreten, d.h. dass beispielsweise eine Relation auf eine andere Liste oder ein Listenelement einer anderen Liste verweist. Auch kann eine Relation die Kategorie einer anderen Liste oder der gleichen Liste betreffen. Dann betrifft eine Relation den Index einer anderen Liste beispielsweise einer anderen Kategorie.

Vorteilhaft werden zu den Listenelementen nur die Relationen auf die nächst höhere Hierarchieebene angegeben und/oder gespeichert. Es können aber auch weitere Relationen zu darüber hinaus gehenden Hierarchieebenen angegeben und/oder gespeichert werden.

In Figur 2 fällt auf, dass die Straßen eine Relation auf die Stadtteile aufweisen und zusätzlich auf die Stadt selbst. Dies kann zweckmäßig vorgenommen werden, wenn die Stadtteile keiner gesonderten Kategorie zugeordnet sind im Vergleich zu den Städten selbst.

Bei der hierarchischen Umgebungszieleingabe werden üblicher Weise nacheinander mehrere geografische Partitionen verarbeitet. In jeder Partition werden die Elemente in einer vorgebbaren Kategorie des vorliegenden Interesses untersucht und es werden vorteilhaft nur diejenigen Elemente zur weiteren Verarbeitung verwendet oder zugelassen, die eine Relation auf eine vorgegebene nächst höhere Hierarchieebene aufweisen. Damit können beispielsweise Städte des eingegebenen Landes ausgefiltert werden, und in einem weiteren Schritt die Straßen oder Punkte des Interesses, wie Restaurants o.ä. einer ausgewählten Stadt. Dabei wird die Hierarchie über die Filterung der Listen bzw. Tabellen nach ihren Relationen ermittelt.

Werden die Elemente zusätzlich noch mit ihrer geographischen Position attributiert, ist es möglich aus denselben geographischen Partitionen Listen sortiert nach Entfernung zu einer Fahrzeugposition zu erzeugen. Dabei kann beispielsweise auch eine hierarchische Vorgabe berücksichtigt werden, wie beispielsweise eine Sortierung aller Hotels in Köln nach der Entfernung zu einem Standort in Düsseldorf. Weiterhin kann über die Relationen die Zugehörigkeit eines Elements zu seinen übergeordneten Hierarchieebenen ermittelt und angegeben werden.

Entsprechend kann zu einem in der Umgebung ausgewählten Hotel angegeben werden, daß es im Land Deutschland in der Stadt Köln und in einem bestimmten Postleitzahlenbereich und in einem bestimmten Stadtteil liegt. Mit diesen Informationen können Fahrerinformationssysteme ihre Zieleingabedialoge auffüllen. Damit muss ein Nutzer, der ein weiteres Ziel in derselben Stadt anfahren will, nicht erneut die Stadt eingeben.

Welche Teile einer Stadt für die Eingabe zur Verfügung stehen, kann über den Zuschnitt der geographischen Partitionen und die Auswahl der Partitionen bei der Einlagerung in den Hauptspeicher des Navigationssystems entschieden werden.

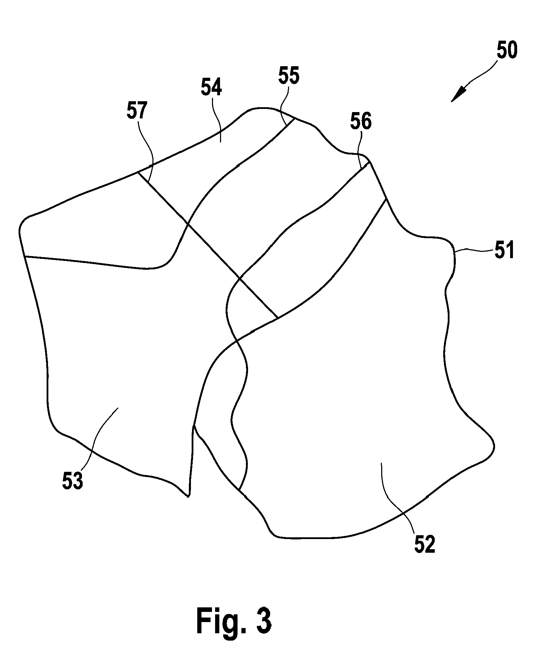

Die Figur 3 zeigt einen Kartenausschnitt einer digitalen Karte 50, wobei beispielhaft lediglich ein Ausschnitt von Hildesheim 51 in Deutschland dargestellt ist. Die Stadt Hildesheim ist dabei in verschiedene Partitionen aufgeteilt, die den Stadtteilen entsprechen. Entsprechend sind in Hildesheim verschiedene Standteile 52 bis 54 dargestellt, die mit Oststadt 54, Weststadt 53 und Ochtersum 52 benannt sind. Innerhalb des Stadtgebiets von Hildesheim 51 sind weiterhin Straßen 55 bis 57 dargestellt, wie die Goslarsche Straße 55, die Alfelder Straße 56 und die Bundesstraße B6 57.

Man erkennt in der Karte 50, dass die Bundesstraße B6 57 durch die Stadtteile Oststadt 54 und Weststadt 53 verläuft bzw. zwischen diesen Stadtteilen verläuft. Es ist weiterhin in der Karte 50 zu erkennen, dass die Goslarsche Straße 55 ebenso durch die Stadtteile Oststadt 54 und Weststadt 53 verläuft. Weiterhin ist zu erkennen, dass die Alfelder Straße 56 alle drei dargestellten Stadtteile 52, 53 und 54 durchquert. Dies entspricht insgesamt den dargestellten Relationen in der Tabelle der Figur 2.

## Patentansprüche

1. Verfahren zum Betrieb eines Navigationssystems (1), insbesondere eines Navigationssystems für ein Kraftfahrzeug, mit einem Speicher (2), einer Anzeigeelement (3) und zumindest einem Bedienelement (4), wobei Kartendaten von einem Kartendatenspeicher (5) in den Speicher (2) ladbar sind, **dadurch gekennzeichnet, dass** die Kartendaten Daten verschiedener Kategorien umfassen und in geografische Partitionen unterteilbar sind, wobei für jede Partition die Daten für jede Kategorie in einer Liste abgelegt sind, wobei Listenelemente eine Relation zu anderen Listenelementen aufweisen.

2. Verfahren nach Anspruch 1, **dadurch gekennzeichnet, dass** durch die Partitionen sich etwa ein Kreis approximieren lässt.

3. Verfahren nach Anspruch 1 oder 2, **dadurch gekennzeichnet, dass** zumindest einzelne der Partitionen etwa eine quadratische, sechseckige oder rechteckige geometrische Gestalt oder eine unregelmäßige geometrische Gestalt haben.

4. Verfahren nach einem der vorhergehenden Ansprüche, **dadurch gekennzeichnet dass** die Kartendaten in den Listen nach Namen sortiert abgelegt sind.

5. Verfahren nach einem der vorhergehenden Ansprüche, **dadurch gekennzeichnet, dass** als eine Kategorie angesehen wird oder als Kategorie abgespeichert wird: Land, Stadt, Stadtteil, Teilort, Straße, Punkt des Interesses, Restaurant, Hotel, Museum oder Andere.

6. Verfahren nach einem der vorhergehenden Ansprüche, **dadurch gekennzeichnet, dass** die Listenelemente zusätzlich mit ihrer geografischen Position attributiert sind.

7. Navigationssystem mit einem Speicher (2), einem Anzeigeelement (3) und zumindest einem Bedienelement (4), wobei der Speicher der Speicherung von ausgewählten Kartendaten aus einem Kartendatenspeicher (5) dient und Anwendungen auf den Speicher (2) und die dort gespeicherten Kartendaten zugreifen zur Durchführung eines Verfahrens nach zumindest einem der vorhergehenden Ansprüche 1 bis 6.

8. Speichermedium mit einer digitalen Karte mit Kartendaten, **dadurch gekennzeichnet, dass** die Kartendaten Daten verschiedener Kategorien umfassen und in geografische Partitionen unterteilbar sind, wobei für jede Partition die Daten für jede Kategorie in eine Liste als Listenelemente abgelegt sind, wobei Listenelemente eine Relation zu anderen Listenelementen aufweisen, wobei mit den Kartendaten ein Verfahren nach zumindest einem der vorhergehenden Ansprüche 1 bis 6 durchführbar ist.
